# EUROPÄISCHE PATENTANMELDUNG

(11) **EP 1 267 040 A2**
(43) Veröffentlichungstag der Anmeldung: **18.12.2002**
(21) Anmeldenummer: 02405404.1
(22) Anmeldetag: 21.05.2002
(51) Int. Cl.: F01D 5/18

(54) **Gasturbinenschaufelblatt**

(30) Priorität: 11.06.2001 US 877073
(71) Anmelder: ALSTOM (Switzerland) Ltd, 5401 Baden (CH)
(72) Erfinder: Miller, Samuel, Port St. Lucie, Florida 34983 (US); Roeloffs, Norman, Tequesta, Florida 33469 (US)

(57) **Zusammenfassung**

Ein Schaufelblatt (1) umfaßt interne Kühlluftkanäle (15a,b,c), die mit einem oder mehreren radial nach außen und radial nach innen verlaufenden Kanälen (15a,b,c) auf schlangenlinienförmige Art angeordnet sind. Die Kanäle (15a,b,c) stehen über Kehren (16, 20) von annähernd 180° in Fließverbindung. Erfindungsgemäß werden die Kehren nahe des Fusses des Schaufelblatts, die einen radial nach innen verlaufenden Kanal mit einem radial nach außen verlaufenden Kanal verbinden, durch eine Kehre (20) im Fussbereich realisiert, die durch die Kanalseitenwände (15d,e), die radial nach innen zum inneren Ende des Fusses (2) des Schaufelblatts verlaufen, und durch eine Endplatte (21), die an den radial inneren Ende der Wände (15d,e) angebracht ist, begrenzt wird.

## Beschreibung

### Technisches Gebiet der Erfindung

Diese Erfindung betrifft ein Gasturbinenschaufelblatt mit inneren schlangenlinienförmigen Kanälen zu Kühlzwecken.

### Allgemeiner Stand der Technik

Turbinenschaufelblätter sind den sehr hohen Temperaturen des heißen Gases ausgesetzt, das die Turbine antreibt. Um Schäden an den Schaufelblättern aufgrund der hohen Temperaturen zu vermeiden und um eine angemessenen Lebensdauer sicherzustellen, werden die Schaufelblätter äußerlich und innerlich durch ein Kühlmedium gekühlt, typischerweise durch Kühlluft, die von dem Kompressor der Gasturbine abgezapft wird. Innerliches Kühlen des Schaufelblatts wird durch mehrere Kanäle innerhalb des Schaufelblatts zwischen der druckseitigen Wand und der saugseitigen Wand des Schaufelblatts realisiert. Die Kanäle erstrecken sich typischerweise längs der Spannweite vom Fuss des Schaufelblatts zu seiner Spitze. Einige der Kanäle bestehen aus einem einzigen Kanal mit einer Auslaßöffnung nahe der Spitze des Schaufelblatts und/oder mehreren Grenzschichtkühlungslöcher auf den Kanten oder der Seitenwand des Schaufelblatts. Andere Kanäle folgen einem schlangenlinienförmigen Weg, wodurch sie es der Kühlluft erlauben, zum Beispiel vom Fuss zur Spitze und um eine 180°-Kehre zu strömen. Von der Spitze verläuft sie zum Fuss und um eine weitere 180°-Kehre, die sie wiederum zur Spitze hin lenkt, wo sie schließlich durch Austrittsöffnungen oder Grenzschichtkühlungslöcher austritt. Kühlkanäle dieser Art sind zum Beispiel in der US 5.403.159 offenbart. Sie ermöglichen einen hohen inneren Wärmeübergang mit einer minimalen Menge von Kühlluft.

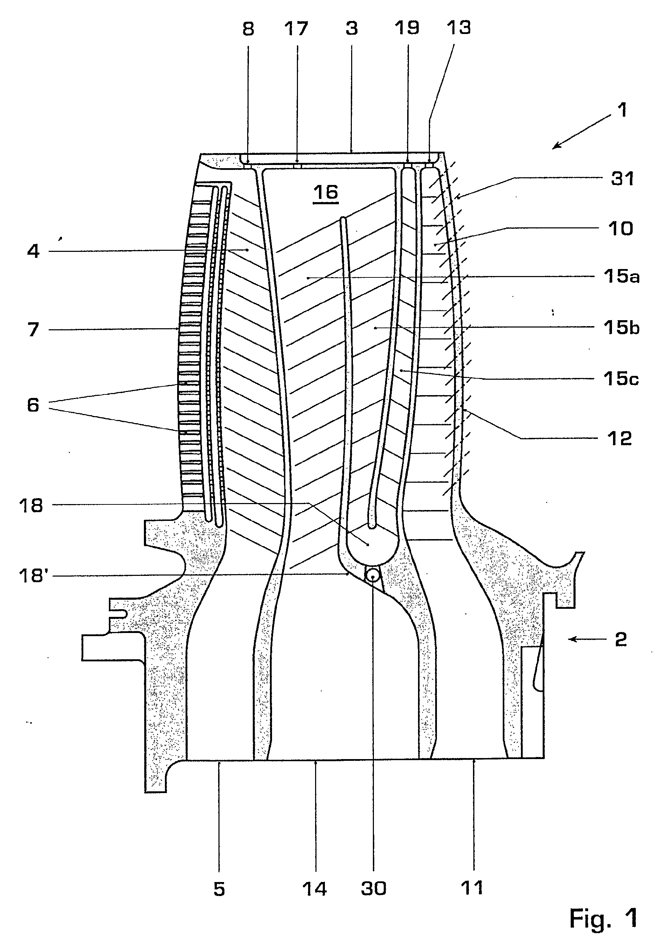

Figur 1 zeigt einen radialen Querschnitt eines typischen Schaufelblatts 1 gemäß dem Stand der Technik mit mehreren inneren Kanälen, die radial zwischen dem Fuss 2 und der Spitze 3 Schaufelblatts 1 verlaufen. Ein erster innerer Kanal 4 verläuft von einer Eintrittsöffnung 5 in dem Fuss 2 radial nach außen zur Spitze 3 des Schaufelblatts. Kühlluft kann von dem Fuss 2 durch den Kanal strömen und durch mehrere Kühlschlitze 6 längs der Hinterkante 7 sowie durch ein Spitzenloch 8 austreten. Ein zweiter innerer Kanal 10 verläuft von einer Eintrittsöffnung 11 radial längs der Vorderkante 12 des Schaufelblatts nach außen. Kühlluft strömt durch diesen Kanal 10 und tritt durch ein Spitzenloch 13 und durch mehrere Reihen von Grenzschichtkühlungslöcher 31 aus, die durch die Vorderkante 12 des Schaufelblatts gebohrt sind. Ein schlangenlinienförmiger Kanal umfaßt eine Eintrittsöffnung 14 am radial inneren Ende des Fusses und einen radial nach außen verlaufenden ersten Kanal 15a mit einem Spitzenloch 17. An der Spitze führt eine 180°-Kehre 16 zu einem Kanal 15b, der radial nach innen verläuft. Am radial inneren Ende des Kanals führt eine zweite 180°-Kehre 18 zu einem dritten Kanal 15c, der radial nach außen zu einem Spitzenloch 19 führt. Durch die geraden und schlangenlinienförmigen Kanäle strömende Kühlluft kühlt das Schaufelblatt von innen durch Aufprallkühlung und tritt durch die Grenzschichtkühlungslöcher auf den Kanten des Schaufelblatts 1 und/oder durch die Spitzenlöcher aus. Andere typische Schaufelblätter weisen mehrere schlangenlinienförmige Kühlkanäle oder Kühlkanäle mit fünf Kanälen und fünf Kehren auf.

Schaufelblätter mit einer inneren schlangenlinienförmigen Geometrie für die Kühlkanäle werden typischerweise durch ein Investmentgußverfahren hergestellt, das einen Keramikkern einsetzt, um die einzelnen inneren Kanäle zu definieren. Nach dem Gießen, wird der Keramikkern aus dem Schaufelblatt durch ein Auslaugverfahren entfernt. Die Grenzschichtkühlungslöcher auf den Kanten und Seitenwänden des Schaufelblatts werden anschließend durch ein Laserbohrverfahren hergestellt. Dieses Verfahren beinhaltet das Einsetzen eines Abschirm- oder Sperrmaterials, das die Laserstrahlung auf die gewünschten Orte der Grenzschichtkühlungslöcher begrenzt und eine Schädigung der Kanalwände oder anderer innerer Flächen des Schaufelblatts verhindert. Ein derartiges Verfahren ist beispielsweise in der US 5.773.790 beschrieben. Es verwendet Wachsmaterial als Sperrmaterial.

Während des Vorgangs des Gießens der inneren Kanäle ist es infolge thermischer Spannungen, die durch unterschiedliche Aufwärm- und Abkühlgeschwindigkeiten des Kerns und des umgebenden Metalls verursacht werden, oft schwierig, die Separation der Kanäle in den Kernen aufrechtzuerhalten.

Eine geläufige Praxis zur Aufrechterhaltung der Separation der schlangenlinienförmigen Kanäle 15a, b, c und zur Halterung des Kerns während des Gießverfahrens verwendet einen konisch geformten Durchbruch im Kern ein. Diese konischen Durchbrüche werden als Teil des Kerns ausgebildet und verlaufen vom Fuss durch eine Öffnung in der Wand der 180°-Kehre 18 und in die Kanäle 15b und 15c hinein. Nachdem das Teil gegossen und der Kern ausgelaugt ist, wird der konische Durchbruch mit einem kugelförmigen Stopfen 30 abgeschlossen, der festgelötet wird.

Der konische Durchbruch hält eine nahezu konstante Querschnittsfläche und einen nahezu konstanten Radius der Außenwand durch die 180°-Kehre hindurch aufrecht, um den Druckabfall zu minimieren. Typische gemessene Druckabfälle über die Kehren betragen üblicherweise mehr als das 1,5-fache des dynamischen Drucks des in die Kehre eintretenden Kühlluftstroms. Der konische Durchbruch weist jedoch am Kern einen Schwachpunkt auf, an dem es brechen kann, woraus sich eine Bewegung der Kanäle 15b und 15c, der Kehre 18 und des Fussbereichs des Kanals 15a ergibt.

Nach dem Gießvorgang und dem Auslaugen des Kernmaterials muß für das Laserbohren der Grenzschichtkühlungslöcher ein Abblockmaterial in die Kühlkanäle eingesetzt werden. Da die Kanäle 15b und 15c, die den 180°-Kehren folgen, von keinem der beiden Enden einfach zugänglich ist, ist es schwierig, diese Kanäle mit Abblockmaterial zu füllen. In der derzeitigen Praxis wird dieses Problem durch die Verwendung eines flüssigen Wachses umgangen, das typischerweise heiß in die Öffnung 14 injiziert wird, bis Wachs aus dem Spitzenloch 19 austritt. Nach dem Abschluß des Laserbohrens, wird das wächserne Abblockmaterial aus dem Schaufelblatt durch Erwärmen des Schaufelblatts und Verbrennen des Wachses entfernt. In der Praxis hat sich jedoch herausgestellt, daß die Verwendung von Wachs als Abblockmaterial die Laserenergie nicht hinreichend absorbiert und daher nur einen begrenzten Schutz vor einem sogenannten Rückwandauftreffen bereitstellt.

### Darstellung der Erfindung

Eine Aufgabe der Erfindung besteht darin, ein Schaufelblatt und ein Verfahren zur Herstellung dieses Schaufelblatts zu schaffen, das interne Kühlfluidkanäle aufweist, die einen schlangen- linienförmigen Pfad bilden, der einen oder mehrere radial nach außen verlaufende Kanäle und einen oder mehrere radial nach innen verlaufende Kanäle aufweist, die durch Kehren von annähernd 180° verbunden sind. Eine Aufgabe der Erfindung besteht insbesondere darin, ein Schaufelblatt und ein Verfahren zur Herstellung dieses Schaufelblatts bereitzustellen, das eine verbesserte Einhaltung der Kanalseparation während des Gießverfahrens und die Verwendung eines Sperrmaterials für einen Laserbohrvorgang ermöglicht, das eine größere Abschirmung verglichen mit dem bei derzeitigen Herstellungsverfahren verwendeten Sperrmaterial bereitstellt.

Ein Schaufelblatt umfaßt auf schlangenlinienförmige Art angeordnete, interne Kühlluftkanäle mit einem oder mehreren radial nach außen verlaufenden Kanälen, einem oder mehreren radial nach innen verlaufenden Kanälen und Kehren von annähernd 180°, die für eine Fließverbindung zwischen einem radial nach innen verlaufenden Kanal und einem radial nach außen verlaufenden Kanal sorgen. Ein in einem schlangenlinienförmigen Kanal radial nach innen verlaufender Kanal wird durch die Innenflächen der druck- und saugseitigen Wand des Schaufelblatts, eine erste Wand und eine zweite Wand begrenzt, die ihn von benachbarten Kanälen trennt. Ein in einem schlangenlinienförmigen Kanal radial nach außen verlaufender Kanal, der dem radial nach innen verlaufenden Kanal in Richtung des Kühlluftstroms folgt, wird durch die Innenflächen der druck- und saugseitigen Wand des Schaufelblatts, die vorgenannte zweite Wand und eine dritte Wand begrenzt. Diese dritte Wand kann eine Trennwand zu einem weiteren Kühlkanal oder zu der Vorder- oder Hinterkantenwand des Schaufelblatts sein.

Erfindungsgemäß steht jeder radial nach innen verlaufende Kanal mit dem in Richtung des Kühlfluidstroms nächsten radial nach außen verlaufenden Kanal mittels einer Kehre im Fussbereich des Schaufelblatts in Fließverbindung. Diese Kehre im Fussbereich wird durch die erste Wand des radial nach innen verlaufenden Kanals und die dritte Wand des radial nach außen verlaufenden Kanals begrenzt, die beide zu dem radial inneren Ende des Fusses des Schaufelblatts verlaufen. Die Kehre wird außerdem durch ein Bauteil begrenzt, das die Kehre am radial inneren Ende des Fusses des Schaufelblatts abschließt und an den radial inneren Enden der ersten und dritten Wand der Kanäle angebracht ist.

Der radial nach innen verlaufende Kanal und der radial nach außen verlaufende Kanal werden somit unter der Plattform des Schaufelblatts zusammengeführt. Es besteht daher keine Notwendigkeit für eine gekrümmte Außenwand für eine Kehre auf Höhe der Schaufelblattplattform. Diese Geometrie für ein Schaufelblatt vermeidet eine 180°-Kehre mit einer gekrümmten Seitenwand und vermeidet insgesamt die Notwendigkeit eines Lochs zur Einführung eines konischen Durchbruchs und des nachfolgenden Verschlusses mit einer Kugelverlötung.

Bei einem erfindungsgemäßen Verfahren zur Herstellung des Schaufelblatts wird ein Keramikkern zum Gießen der inneren Kanäle zwischen der druck- und saugseitigen Wand des Schaufelblatts verwendet. Mittels des Keramikkerns wird beim Gießvorgang die Kehre im Fussbereich am radial inneren Ende des Fusses des Schaufelblatts ausgeprägt. Nach dem Gießvorgang wird das Keramikmaterial aus dem gegossenen Schaufelblatt ausgelaugt. Danach werden PTFE- oder Teflonstreifen in die Kanäle eingeführt und Grenzschichtkühlungslöcher gebohrt. Während des Bohrvorgangs schützen die Teflonstreifen das umgebende Gußmaterial gegen die Laserstrahlung. Nach dem Bohrvorgang werden die Teflonstreifen entfernt und ein Bauteil am Ende der Kehre im Fussbereich platziert, um diese abzuschließen.

Die Kehre im Fussbereich weist während des Gießvorgangs ein offenes Ende auf, das einen guten Zugang zur Anbringung zusätzlicher Kernträger in dem Bereich der Kehre ermöglicht. Dies sorgt für eine bessere Kontrolle über die Wandseparation und des Ortes der Kehre. Nach dem Gießvorgang und der Entfernung des Kerns ermöglicht das offene Ende einen ausgezeichneten Zugang zur Einführung eines Sperrmaterials, das erforderlich ist, um das Laserbohren der Grenzschichtkühlungslöcher durch- zuführen.

Dieses Sperrmaterial ist nicht notwendigerweise fließend wie beispielsweise ein wächsernes Material, sondern kann stattdessen aus einem steiferen Material bestehen, wie beispielsweise Streifen aus Teflon (PTFE). Teflon ermöglicht eine verbesserte Abschirmung verglichen mit dem wächsernen Material, das derzeit in der Praxis eingesetzt wird. Nach dem Laserbohrvorgang werden die Teflonstreifen wieder einfach entfernt, worauf jede Kehre im Fussbereich mit einem Bauteil verschlossen wird, wie beispielsweise einer Endplatte, die an die radial inneren Enden der Seitenwände der durch die Kehre im Fussbereich verbundenen schlangenlinienförmigen Kanäle angeschweißt oder angelötet wird.

Die Kehren mit offenem Ende erlauben außerdem ein verbessertes Auslaugen des Kernmaterials nach dem Gießvorgang.

### Kurze Beschreibung der Figuren

Figur 1 zeigt einen Längsschnitt eines Schaufelblatts gemäß dem Stand der Technik, das gemäß derzeitiger Praxis hergestellt ist,
Figur 2a zeigt einen Längsschnitt eines erfindungsgemäßen Schaufelblatts längs der Spannweite mit mehreren Kehren im Fussbereich, die radial nach innen verlaufende Kanäle mit radial nach außen verlaufenden Kanälen verbinden,
Figur 2b zeigt einen Längsschnitt eines erfindungsgemäßen Schaufelblatts mit einer größeren Zahl innerer Kanäle und Kehren im Fussbereich.

### Ausführung der Erfindung

Figur 1 ist als Teil des Standes der Technik oben beschrieben worden.

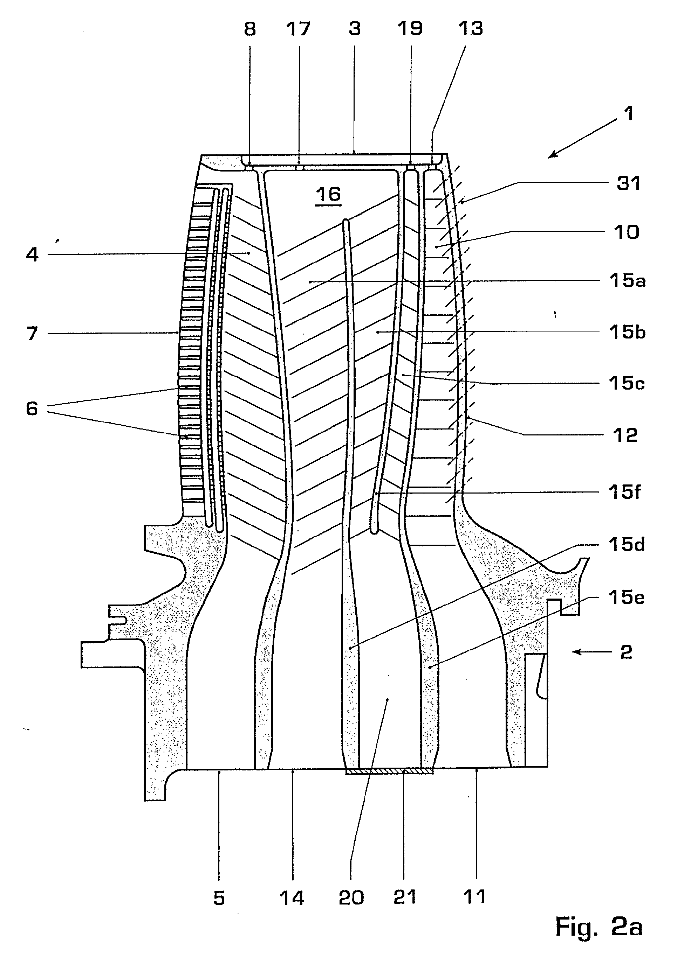

Figur 2a zeigte ein Schaufelblatt 1 einer ähnlichen Bauform wie in Figur 1. Es erstreckt sich vom Fuss 2 zur Spitze 3 und umfaßt mehrere innere Kanäle. Ein Kanal 4 mit einem einzelnen Gang verläuft von der Öffnung 5 für Kühlluft am Fuss 2 radial nach außen zur Spitze 3. Kühlluft kann durch Kühlschlitze 6 längs der Hinterkante 7 und ein Spitzenloch 8 austreten. Ein zweiter eingängiger Kanal 10 verläuft längs der Vorderkante 12 von der Eintrittsöffnung 11 zur Spitze, wo sie ein Spitzenloch 13 für die Kühlluft aufweist. Ein dreigängiger Kanal besteht in diesem Beispiel der Erfindung aus einer Eintrittsöffnung 14 für Kühlluft am Fuss des Schaufelblatts, aus Kanälen 15a und b, die durch eine 180°-Kehre 16 im Fussbereich in Fließverbindung stehen, und einem Kanal 15c, der durch die zweite 180°-Kehre 20 im Fussbereich in Fließverbindung mit Kanal 15b steht. Der radial nach innen verlaufende Kanal 15b wird von den Innenflächen der druck- und saugseitigen Wände des Schaufelblatts und einer ersten Wand 15d, die ihn von dem stromaufwärtigen und radial nach außen verlaufenden Kanal 15a trennt, und schließlich von einer zweiten Wand 15f gebildet, die ihn von dem stromabwärtigen und radial nach außen verlaufenden Kanal 15c trennt. Die 180°-Kehre 20 erstreckt sich erfindungsgemäß zum radial inneren Ende des Fusses 2 bis auf die Höhe der Eintrittsöffnungen 5, 11 und 14. Sie wird von den Innenflächen der druck- und saugseitigen Wand und den radial nach innen verlaufenden Fortsätzen der Wände 15d und 15e gebildet. Der radial nach außen verlaufende Kanal 15c des schlangenlinienförmige Kanals wird durch eine Seite der Seitenwand 15e begrenzt, die ihn vom Kühlkanal 10 trennt.

Der gezeigte, zum Gießen des Schaufelblatts verwendete Keramikkern ermöglicht eine verbesserte Genauigkeit bei der Einhaltung der Wandseparation während des Gießens. Außerdem ermöglicht die offene Kehre und daher das Fehlen eines blinden Kanals die Verwendung zusätzlicher Kernhalter und einen einfachen Zugang zu deren Einführung. Der Druckabfall um die Kehre 20 im Fussbereich für dieses Schaufelblatt herum ist annähernd der gleiche wie der für das in Figur 1 gezeigte Schaufelblatt des Standes der Technik.

Nach dem Gießvorgang und der Entfernung des Keramikkerns durch Auslaugen werden feste Bögen aus Teflon oder PTFE als Abschirmmaterial für das Laserbohren eingeführt. Die festen Teflonbögen sorgen im Vergleich zu dem in der derzeitigen Praxis verwendeten Wachsmaterial für einen besseren Schutz des Schaufelblattmaterials, das die zu bohrenden Grenzschichtkühlungslöcher umgibt.

Die Kehre 20 im Fussbereich wird schließlich mittels einer Endplatte 21 verschlossen, die an das radial innere Ende der Kanalwände 15d und 15e der Kanäle 15b und 15c angeschweißt oder angelötet wird.

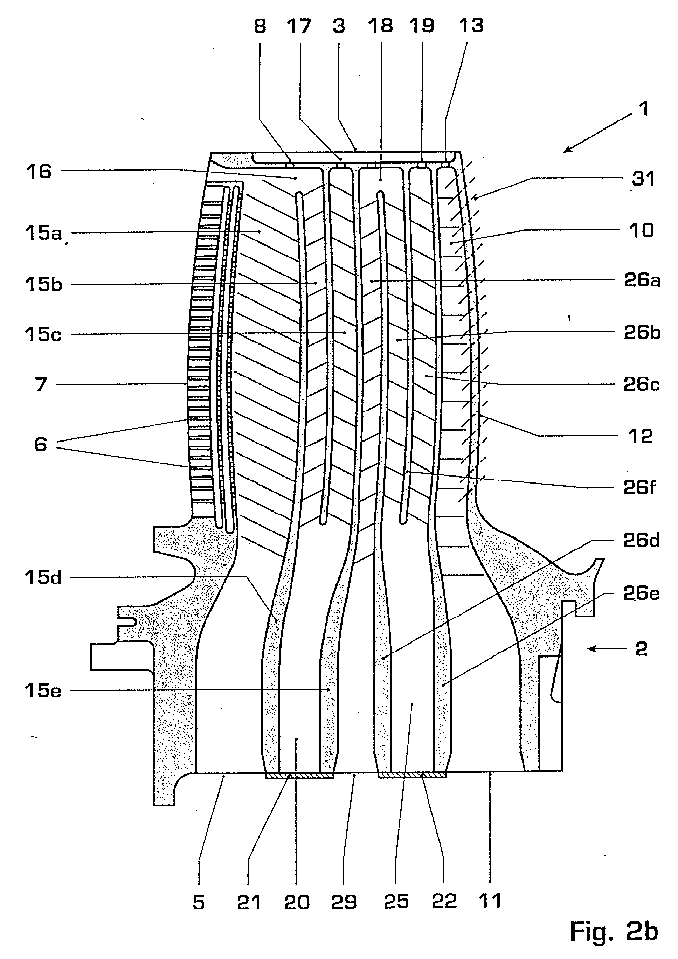

Figur 2b zeigt ein ähnliches Schaufelblatt wie das in Figur 2a. Die Bezugszeichen in dieser Figur beziehen sich auf gleiche Komponenten wie die in Figur 2a. Das Schaufelblatt umfaßt einen zusätzlichen, dreigängigen, schlangenlinienförmige Kanal 26a,b,c mit Wänden 26d,e,f und einer Kehre 25 im Fussbereich. Die erste Kehre 20 führt den radial nach innen verlaufenden Kanal 15b und den radial nach außen verlaufenden Kanal 15c zusammen. Die Kehre 25 führt Kanäle 26b und 26c zusammen. Die Kehre 25 wird durch eine Endplatte 22 abgeschlossen, die an den radial inneren Enden der Wände 26d und 26e der Kanäle 26b und c angebracht ist.

Die erfindungsgemäßen Kehren im Fussbereich sind nicht nur bei eingängigen oder mehreren dreigängigen Kanälen wie in den Figuren 2a und 2b anwendbar, sondern auch bei Schaufelblättern mit fünf- und mehrgängigen Kanälen.

In den Figuren verwendete Bezeichnungen
- 1: Schaufelblatt
- 2: Fuss
- 3: Spitze
- 4: erster innerer Kanal
- 5: Eintrittsöffnung
- 6: Kühlschlitze
- 7: Vorderkante
- 8: Spitzenloch
- 9 10: zweiter innerer Kanal
- 11: Eintrittsöffnung
- 12: Hinterkante
- 13: Spitzenloch
- 14: Öffnung für eintretende Kühlluft
- 15a: erster radial nach außen laufender Kanal der Serpentine
- 15b: radial nach innen laufender Kanal der Serpentine
- 15c: zweiter radial nach außen laufender Kanal der Serpentine
- 15d: Wand des schlangenlinienförmigen Kanals
- 15e: Wand des schlangenlinienförmigen Kanals
- 15f: Wand des schlangenlinienförmigen Kanals
- 16: Kehre
- 17: Spitzenloch
- 18: Kehre
- 18': Außenwand der Kehre
- 19: Spitzenloch
- 20: Kehre im Fussbereich
- 21: Endplatte
- 25: Kehre im Fussbereich
- 26a: erster radial nach außen laufender Kanal der Serpentine
- 26b: radial nach innen laufender Kanal der Serpentine
- 26c: erster radial nach außen laufender Kanal der Serpentine
- 26d: Wand des schlangenlinienförmigen Kanals
- 26e: Wand des schlangenlinienförmigen Kanals
- 26f: Wand des schlangenlinienförmigen Kanals
- 29: Öffnung für eintretende Kühlluft
- 30: kugelförmiger Stopfen
- 31: Grenzschichtkühlungslöcher auf Vorderkante

## Patentansprüche

1. Schaufelblatt (1) mit auf schlangenlinienförmige Art angeordneten internen Kühlluftkanälen (15a,b,c, 26a,b,c) mit einem oder mehreren radial nach außen verlaufenden Kanälen (15a,c, 26a,c), einem oder mehreren radial nach innen verlaufenden Kanälen (15b, 26b) und Kehren (16, 18, 20, 25) von annähernd 180°, durch welche die radial nach innen verlaufenden Kanäle (15b, 26b) in Fließverbindung mit den radial nach außen verlaufenden Kanälen (15a,c, 26a,c) stehen, wobei bei jedem schlangenlinienförmigen Kanal (15a-c, 26a-c) ein radial nach innen verlaufender Kanal (15b, 26b) durch die Innenflächen der druck- und saugseitigen Wand des Schaufelblatts, eine erste Wand (15d, 26d) und eine zweite Wand (15e, 26e) begrenzt wird, die den radial nach innen verlaufenden Kanal (15b, 26b) von einem radial nach außen verlaufenden Kanal (15a,c, 26a,c) trennt, der dem radial nach innen verlaufenden Kanal (15b, 26b) in Richtung des Kühlluftstroms folgt, und wobei ein radial nach außen verlaufender Kanal (15c, 26c) durch die Innenflächen der druck- und saugseitigen Wand des Schaufelblatts, die zweite Wand (15e, 26e) des radial nach innen verlaufenden Kanals (15b, 26b) und eine dritte Wand (15f, 26f) begrenzt wird,
**dadurch gekennzeichnet, daß**
die Kehre (20, 25), die für die Fließverbindung zwischen einem radial nach innen verlaufenden Kanal (15b, 26b) und dem in Richtung des Kühlluftstroms nächsten radial nach außen verlaufenden Kanal (15c, 26c) sorgt, durch die erste Wand (15d, 26d) und die dritte Wand (15e, 26e) begrenzt wird, wobei die erste und dritte Wand (15d,e, 26d,e) radial nach innen zu dem radial inneren Ende des Fusses (2) des Schaufelblatts (1) verlaufen, und dadurch, daß die Kehre (20, 25) am radial inneren Ende des Fusses (2) mittels eines Bauteils (21, 22) abgeschlossen wird, das die Enden der ersten und dritten Wand (15d,e, 26d,e) verbindet.

2. Schaufelblatt (1) nach Anspruch 1,
**dadurch gekennzeichnet, daß**
die Kehre (20, 25) von einer Endplatte (21, 22) abgeschlossen wird, die an den radial inneren Ende der ersten Wand (15d, 15e) und der dritten Wand (15e, 26e) des schlangenlinienförmig Kanals (15a-c, 26a-c) angebracht ist.

3. Verfahren zur Herstellung eines Schaufelblatts (1) nach Anspruch 1, bei dem ein Keramikkern zum Gießen der inneren Kanäle des Schaufelblatts verwendet wird, mittels dessen die sich zu dem radial inneren Ende des Fusses des Schaufelblatts erstreckende Kehre (20, 25) ausgeprägt wird, bei dem das Keramikmaterial aus dem gegossenen Schaufelblatt ausgelaugt wird und Teflonstreifen durch das offene Ende der Kehre (20, 25) in die Kanäle eingeführt werden, und bei dem die Grenzschichtkühlungslöcher durch ein Laserbohrverfahren ausgebildet werden, wobei die Teflonstreifen für einen Schutz gegen die Laserstrahlung sorgen, und die Teflonstreifen danach aus den inneren Kanälen entfernt werden, und bei dem eine Endplatte (21, 22) an den radial inneren Enden der ersten und zweiten Wand (15d,e, 26d,e) der inneren Kanäle angebracht wird, um die kehre (20, 25) abzuschließen.
